# EUROPÄISCHE PATENTSCHRIFT

(11) **EP 0 904 629 B1**
(45) Veröffentlichungstag und Bekanntmachung des Hinweises auf die Patenterteilung: **21.04.2004**
(21) Anmeldenummer: 98906803.6
(22) Anmeldetag: 15.01.1998
(51) Int. Cl.: H02K 15/06

(54) **VERFAHREN UND VORRICHTUNG ZUM EINZIEHEN VON SPULEN IN NUTEN VON STATORBLECHPAKETEN ELEKTRISCHER MASCHINEN**
METHOD AND DEVICE TO DRAW-IN COILS INTO SLOTS OF STATOR LAMINATED CORES OF ELECTRIC MACHINES
PROCEDE ET DISPOSITIF POUR LE PASSAGE DE BOBINAGES DANS LES ENCOCHES D'EMPILAGES DE TOLES STATORIQUES DE MACHINES ELECTRIQUES

(30) Priorität: 24.01.1997 DE 19702479; 28.02.1997 DE 19708089
(43) Veröffentlichungstag der Anmeldung: 31.03.1999
(73) Patentinhaber: Elmotec Statomat Vertriebs GmbH, 61184 Karben (DE)
(72) Erfinder: SADIKU, Sadik, D-63543 Neuberg (DE)
(74) Vertreter: Jochem, Bernd , Dipl.-Wirtsch.-Ing
(86) Internationale Anmeldenummer: PCT/DE1998/000121
(87) Internationale Veröffentlichungsnummer: WO 1998/033261

(56) Entgegenhaltungen:
- EP-A- 0 154 763
- US-A- 4 304 045
- US-A- 4 480 379
- US-A- 4 536 954

## Beschreibung

Die Erfindung betrifft ein Verfahren und eine Vorrichtung zum Einziehen von Spulen in Nuten von Statorblechpaketen elektrischer Maschinen, wobei die Spulen auf einer Schablone erzeugt und auf ein aus entsprechend ringförmig angeordneten, parallelen, kurzen und langen Einziehlamellen und einem axial verfahrbaren Einziehstern bestehendes Einziehwerkzeug übertragen und von diesem in die Statornuten eingezogen werden, wobei in einer ersten Phase des Einziehvorgangs zusammen mit einer Vorschubbewegung des Einziehsterns die kurzen Einziehlamellen und die langen Einziehlamellen mit ihren nach oben weisenden freien Enden synchron aus einer ersten Ausgangsposition vorwärts durch die Bohrung des Stators über die Statoroberfläche hinaus zu einer zweiten Position fahren.

Bei bestimmten Größenverhältnissen zwischen Drahtstärke und Spaltweite zwischen den Einziehlamellen sowie anderen ungünstigen Faktoren neigen die Drahtwindungen zum Verklemmen in den Spalten, wenn sie durch den Einziehstern längs feststehender Lamellen vorgeschoben werden. Als Abhilfe ist es bekannt, jeweils eine von zwei Einziehlamellen, die einen bestimmten Spulenstrang führen, zusammen mit dem Einziehstern verfahren zu lassen (vergl. DE-PS 19 18 485). Es ist in diesem Zusammenhang weiterhin bekannt, in der ersten Phase des Einziehvorgangs sämtliche Einziehlamellen zusammen mit dem Einziehstern zu verfahren, die freien Enden der Einziehlamellen dann etwa auf das Niveau der gegenüberliegenden Stirnfläche des Statorblechpakets einzustellen und schließlich den restlichen Einziehhub mit dem Einziehstern allein auszuführen, wobei er in bekannter Weise bis über die freien Enden der Einziehlamellen hinausfährt, um die Wicklungsköpfe der Spulen radial auszuformen (vergl. DE-OS 20 06 526 und DE-AS 26 30 183).

Nachteilig ist, dass gerade am Ende eines Einziehvorgangs noch ein sehr langer Verschiebeweg des Einziehsterns bei bereits feststehenden Einziehlamellen erfolgt, so dass es zu Drahtklemmungen kommen kann. Insbesondere bei relativ hoher Spulenaufbauhöhe kann das gemeinsame Einziehen nur kurz ausgeführt werden, wobei anschließend ein sehr langer Verschiebeweg des Einziehsterns bei bereits feststehenden Einziehlamellen erfolgt.

Da die Anforderungen der Entwickler von Kompressormotoren von Jahr zu Jahr steigen, und zwar versucht man den Wirkungsgrad der Motoren zu verbessern, indem man nicht nur den Stator-Nutschlitz verkleinert, sondern auch einen hohen Füllfaktor verlangt, können diese neuen Statoren nicht mehr mit dem im Stand der Technik bekannten Einziehverfahren und Vorrichtung eingezogen werden. Will man diese neuen Statoren mit z.B. der Vorrichtung nach DE-PS 26 30 183 einziehen, so stellt man fest, dass der Einziehhub mit allen mitfahrenden Lamellen durch die Statorbohrung durch und weiter über die Statoroberkante hinaus, erst einmal funktioniert, aber die hohe Spulenaufbauhöhe in den Spalten zwischen den Lamellen drückt an den oberen freien Enden der Einziehlamelle diese auseinander, so dass die Einziehlamellen nicht oder mit Gewalt heruntergezogen werden und hierdurch die Spulen beschädigt werden.

Aus anderen Gründen, nämlich um ein teilweises Zurückziehen der bereits eingezogenen Spulen zu vermeiden, ist in der ein Verfahren der am Anfang bezeichneten Art beschreibenden US 4,536,954 A vorgesehen, zunächst alle Lamellen bis in ihre Endstellung vorzuschieben und dann eine Gruppe von Lamellen eher zurückzuziehen als eine andere Lamellengruppe.

Der Erfindung liegt die Aufgabe zugrunde, ein Verfahren und eine Vorrichtung der eingangs genannten Art zu schaffen, durch welche im Vergleich zum Stand der Technik die Bedingungen in der Mitte und am Ende des Einziehvorgangs verbessert werden können.

Das zur Lösung der vorstehenden Aufgabe vorgeschlagenene neue Verfahren ist dadurch gekennzeichnet, daß in einer zweiten Phase die freien Enden der langen Einziehlamellen bis knapp über die Statoroberkante in eine dritte Position zurückgezogen werden, während der Einziehstern und die kurzen Einziehlamellen gemeinsam vorwärts bis zu einer dritten Position fahren, und daß in einer dritten Phase der Einziehstern, die kurzen Einziehlamellen und die langen Einziehlamellen aus der dritten Position in die Ausgangsposition zurückfahren.

Durch die vorgeschlagene Maßnahme wird erst einmal der Vorteil aller mitfahrenden Einziehlamellen genutzt, wobei diese Hubbewegung keine Relativbewegung zwischen den Spulen und den Einziehlamellen zulässt und somit auch keine Gefahr besteht, dass die Drähte beschädigt werden, um dann auf der Hälfte der Einziehstrecke den Hub der langen Einziehlamellen umzusteuern, und auf ihrer abwärts gerichteten Fahrt kurz über der Statoroberkante stehen bleiben, wobei die kurzen Einziehlamellen kontinuierlich weiter vorwärts bzw. nach oben durch den Stator fahren und die Spulen komplett in den Stator einziehen. Im Gegensatz zu der bisher bekannten Einziehvorrichtung erfolgt durch die Umsteuerung der langen Einziehlamellen gemäß der Erfindung nicht nur, dass die Drähte im Spalt in Bewegung geraten und sich hierbei nicht festklemmen, sondern es ergibt sich auch der Vorteil, dass die langen Einziehlamellen durch das Abtauchen den Spalt von oben her einseitig freimachen, so dass die Drähte nicht mehr übereinander aufgereiht sind, sondern zu Bündeln zusammenschrumpfen.

Um den zuletzt genannten Vorteil zu beschleunigen ist weiter vorgeschlagen, dass in der zweiten Phase die langen Einziehlamellen mindestens teilweise zurückgezogen werden, bevor der Einziehstern und die kurzen Lamellen vorwärts fahren. Nachdem hierdurch nun eine Anzahl von Drähten nicht mehr übereinander aufgereiht sind, können die langen Einziehlamellen weiter abtauchen bzw. zurückgezogen werden, wobei dann gleichzeitig der Einziehstern und die kurzen Lamellen vorwärts fahren. Hierdurch werden Einziehkräfte vermieden, insbesondere der Druck auf die Einziehlamellen verringert.

In bestimmten Fällen ist es auch denkbar, dass die langen Einziehlamellen bis kurz über die Statoroberkante abtauchen und erst dann die kurzen Einziehlamellen vorwärtsfahren.

Unterstützend für den Einziehvorgang in bestimmten Fällen wird auch vorgeschlagen, dass in der zweiten Phase die langen Einziehlamellen zurückgezogen werden, wobei gleichzeitig der Einziehstern und die kurzen Einziehlamellen vorwärts fahren oder dass in der zweiten Phase die langen Einziehlamellen mit dem Einziehstern und den kurzen Einziehlamellen alternierend verfahren. Die beiden zuletzt genannten Verfahrensabschnitte können dann angewandt werden, wenn die Spulenaufbauhöhe nicht zu hoch ist aber eine relativ hohe Klemmung der Drähte im Einziehspalt vorhanden ist.

Um den Einziehvorgang zu beschleunigen wird weiter vorgeschlagen, dass der Einziehstern und die kurzen Einziehlamellen gemeinsam aus der Ausgangsposition mit einer kontinuierlichen Geschwindigkeit über die zweite Position hinweg zur dritten Position fahren. Wobei es dann vorteilhaft ist, wenn die langen Einziehlamellen aus der zweiten Position in die dritte Position mit gleicher oder mit höherer Geschwindigkeit fahren als die kurzen Einziehlamellen.

Wie auch immer die einzelnen Verfahrensabschnitts-Varianten bereits beschrieben wurden oder noch ausgelegt werden können, ändert dieses nichts am erfinderischen Grundgedanken, dass in einer mittleren Einziehphase bestimmte Einziehlamellen zurückgezogen werden und die anderen vorwärts fahren und dass hierdurch nicht nur der Spalt von oben her einseitig freigemacht wird, sondern auch die Drähte im Spalt durch die Relativbewegung zweier nebeneinander liegender Einziehlamellen günstig beeinflusst werden.

Die erfindungsgemäße Vorrichtung zur Durchführung des vorstehend genannten Verfahrens, bei der in einer ersten Phase des Einziehvorgangs an einem Einziehstern befestigte kurze Einziehlamellen mittels eines ersten Antriebs und an einem Lamellenhalter befestigte lange Einziehlamellen mittels eines zweiten Antriebs mit ihren nach oben weisenden freien Enden synchron aus einer Ausgangsposition über die Statoroberkante hinaus zu einer zweiten Position verfahrbar sind, ist dadurch gekennzeichnet, daß in einer zweiten Phase der zweite Antrieb umsteuerbar ist und zusammen mit dem Lamellenhalter die freien Enden der langen Einziehlamellen bis knapp über die Statoroberkante in eine dritte Position zurückziehbar sind, während der erste Antrieb den Einziehstern und die kurzen Lamellen vorwärts bis zu einer dritten Position antreibt, und daß in einer dritten Phase durch die Antriebe der Einziehstern mit den kurzen Lamellen und der Lamellenhalter mit den langen Lamellen in die Ausgangsposition zurückziehbar sind.

Vorteilhaft ist auch, daß die Antriebe in ihren Geschwindigkeiten und Richtungen frei steuerbar sind.

Für den Einziehvorgang ist es auch vorteilhaft, wenn der Einziehstern und die kurzen Einziehlamellen gemeinsam aus der Ausgangsposition mit einer kontinuierlichen Geschwindigkeit über die zweite Position hinweg zur dritten Position fahren, wobei die langen Einziehlamellen aus der zweiten in die dritte Position mit gleicher oder mit einer höheren Geschwindigkeit fahren als die kurzen Einziehlamellen. Bei einer höheren Geschwindigkeit der langen Einziehlamellen erfolgt ein schnelleres Abtauchen der Lamellen und hierdurch ein schnelleres einseitiges Öffnen des Spaltes von oben her, so dass die Drähte im Spalt nicht mehr übereinander aufgereiht sind, sondern zu Bündeln zusammenschrumpfen.

Unterstützend für das neue Verfahren ist auch vorgesehen, über der Statoroberkante eine Abstützung, bestehend aus Haltering, Stützring und Stützfingern anzuordnen, die nach Bedarf axial verfahrbar ist. Auch die radial verfahrbaren Stützfinger sind denkbar, jedoch technisch aufwendiger. Die Abstützung hat den Vorteil, dass freie über die Statoroberkante herausfahrende Einziehlamellen zentriert und somit den Druck auf die Statorzähne mindert und dazu dient, dass Spulendrähte nicht zwischen den Einziehlamellen eingeklemmt werden.

Weitere vorteilhafte Ausführungsformen sind in den Ansprüchen 16 bis 19 gekennzeichnet. Ihre besonderen Vorteile ergeben sich aus der nachfolgenden Beschreibung mehrerer Ausführungsbeispiele der Erfindung anhand der zeichnung. Diese zeigt in
- Fig.1: einen Längsschnitt durch ein Einziehwerkzeug gemäß der Erfindung in der Ausgangsstellung,
- Fig.2: einen Längsschnitt gemäß Fig. 1 in einer zweiten Position,
- Fig.3: einen Längsschnitt gemäß Fig. 1 in einer dritten Position,
- Fig.4: eine vergrößerte Darstellung der Lage der Spulen zwischen zwei Einziehlamellen,
- Fig.5: einen Längsschnitt durch ein Einziehwerkzeug gemäß der Erfindung in der Ausgangsstellung,
- Fig.6: einen Längsschnitt gemäß Fig. 5 in einer zweiten Position,
- Fig.7: einen Längsschnitt gemäß Fig. 5 in einer dritten Position,
- Fig.8: eine Draufsicht auf Fig. 5 im Bereich des Halterings,
- Fig.9: eine vergrößerte Darstellung aus Fig. 8,
- Fig.10: eine vergrößerte Darstellung einer weiteren Variante aus Fig. 8,
- Fig.11: eine der Figur 6 entsprechende Darstellung einer weiteren Ausführungsform der Erfindung,
- Fig.12: die Anordnung nach Figur 11 in einer dritten Position,
- Fig. 13: eine Detaildarstellung des Bereiches einer Abstützung,
- Fig.14: eine Draufsicht auf den Bereich des Halteringes der weiteren Ausführungsform.

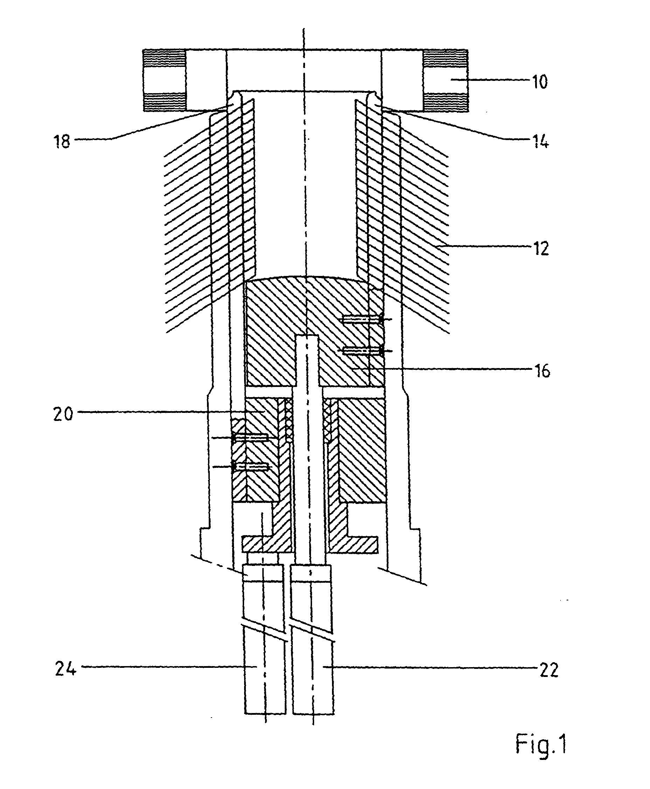

Die in Fig. 1 gezeigten Werkzeuge können zu einer automatischen Wickel- und Einziehvorrichtung gehören, welche z.B. den in der DE-OS 28 25 557 beschriebenen grundsätzlichen Aufbau hat.

Fig. 1 zeigt einen Ring paralleler, mit ihren freien Enden nach oben weisenden Einziehlamellen, in die bevor ein Statorblechpaket 10 aufgesetzt worden ist, Spulen 12 in die Spalten zwischen den Lamellen eingewickelt oder übertragen wurden. Der Ring der Einziehlamellen besteht aus kurzen Einziehlamellen 14, insbesondere jede zweite im Bereich der eingelegten Spulen 12 die fest mit einem Einziehstern 16 verschraubt und aus langen Einziehlamellen 18, die mit einem Lamellenhalter 20 verschraubt sind, wobei der Einziehstern 16 mittels eines Hubzylinders 22 und der Lamellenhalter 20 mittels eines Hubzylinders 24 axial steuerbar ist. In der Praxis werden Einziehstern 16 und Lamellenhalter 20 meistens elektromechanisch gesteuert, wobei die jeweilige Antriebsart hierbei eine untergeordnete Rolle spielt. Entscheidend ist, wie jeweils Einziehstern 16 mit seinen kurzen Einziehlamellen 14 und Lamellenhalter 20 mit seinen langen Einziehlamellen 18 gesteuert werden, das heißt, welche axiale Wege sie gemeinsam, getrennt oder gegenläufig fahren.

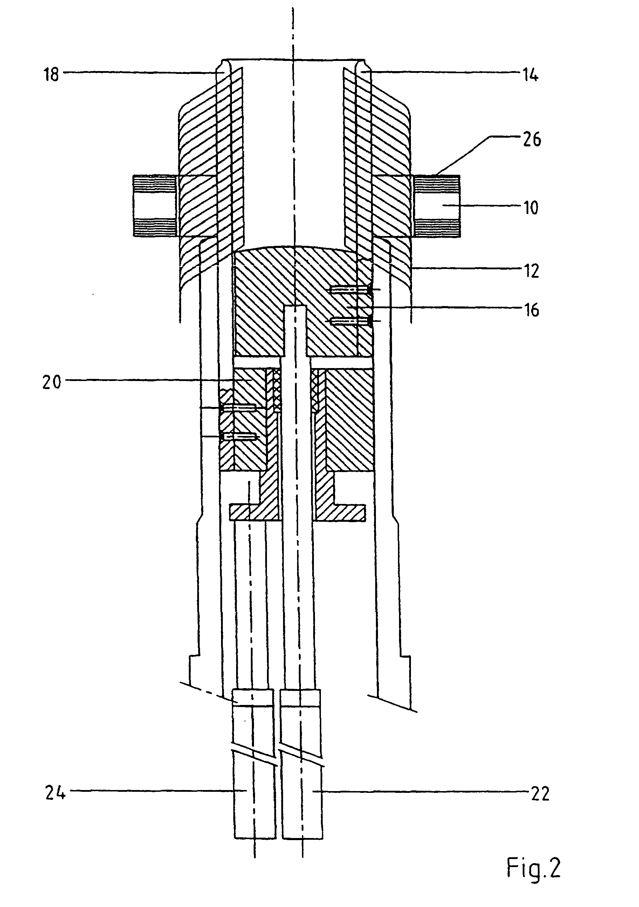

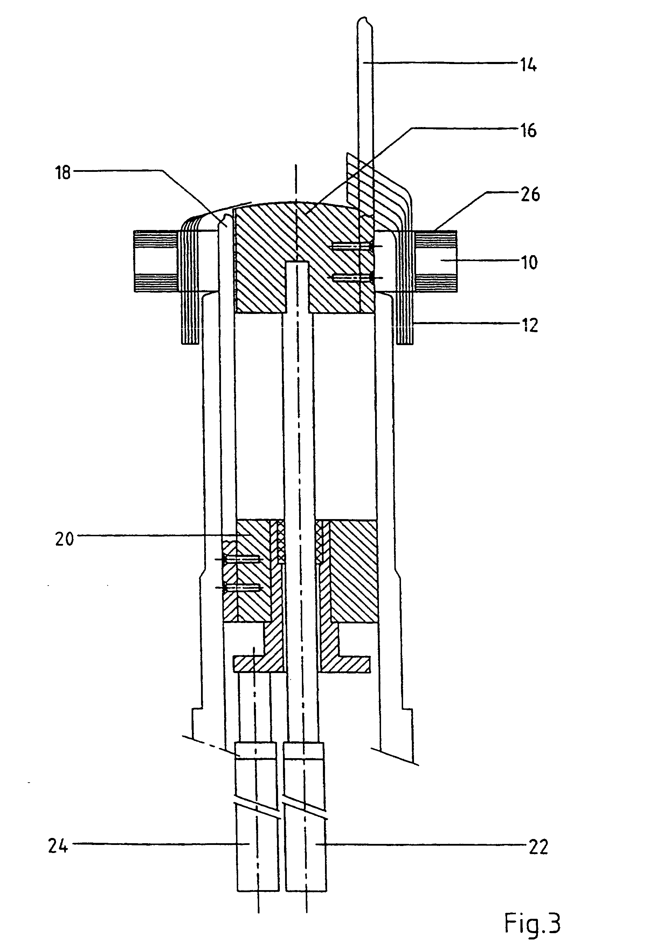

Fig. 2 und Fig. 3 zeigen die gleiche Vorrichtung wie Fig. 1, jedoch jeweils einen Verfahrensschritt weiter.

Fig. 2 zeigt einen Verfahrensschritt, in dem die freien Enden der kurzen Einziehlamellen 14 und die langen Einziehlamellen 18 auf ihrem Weg durch die Statorbohrung schon über die Statoroberkante 26 hinausgefahren sind. Auf diesem Weg von der Stellung in Fig. 1 zu der Position in Fig. 2 sind die Einziehlamellen 14 und 18 synchron gefahren und haben hierbei die Spulen 12 mitgenommen und teilweise in den Stator 10 eingezogen.

Jetzt aus einer Position Fig. 2 in der die freien Enden der Einziehlamellen 14 und 18 über der Statoroberkante 26 stehen, fahren die kurzen Einziehlamellen 14 axial weiter nach oben bzw. weiter durch den Stator 10 hindurch, wobei die langen Einziehlamellen 18 eine axiale Gegenbewegung ausführen und somit nach unten fahren und mit ihren freien Enden kurz über der Statoroberkante 26 wie in Fig. 3 zu sehen, stehen bleiben. In diese Position Fig. 3 ist mit den kurzen Lamellen 14 auch der Einziehstern 16 in eine Position über den freien Enden der langen Einziehlamellen 18 mitgefahren und hat die Spulen 12 in ihre Endstellung gebracht und eingezogen. Anschließend fahren die Einziehlamellen 14 und 18 aus Position Fig. 3 zurück in die Position Fig. 1 und der fertig eingezogene Stator kann entnommen werden. Nicht näher beschrieben wurde, dass Deckstreifen am Ende eines Einziehvorgangs die gefüllten Nuten verschließen.

Sind die entgegengesetzt fahrenden Einziehlamellen 14 und 18 mit gleicher Geschwindigkeit gefahren, so haben sie gleichzeitig ihre Endposition Fig. 3 erreicht. Versuche haben ergeben, dass es vorteilhaft ist, die langen Lamellen 18 relativ schneller abwärts zu fahren als die kurzen Lamellen 14 aufwärts. Der Vorteil liegt darin, dass die langen Lamellen 18 beim Abwärtsfahren bereits Spulenstränge von obenher freigeben und somit ein leichteres Einziehen ermöglichen.

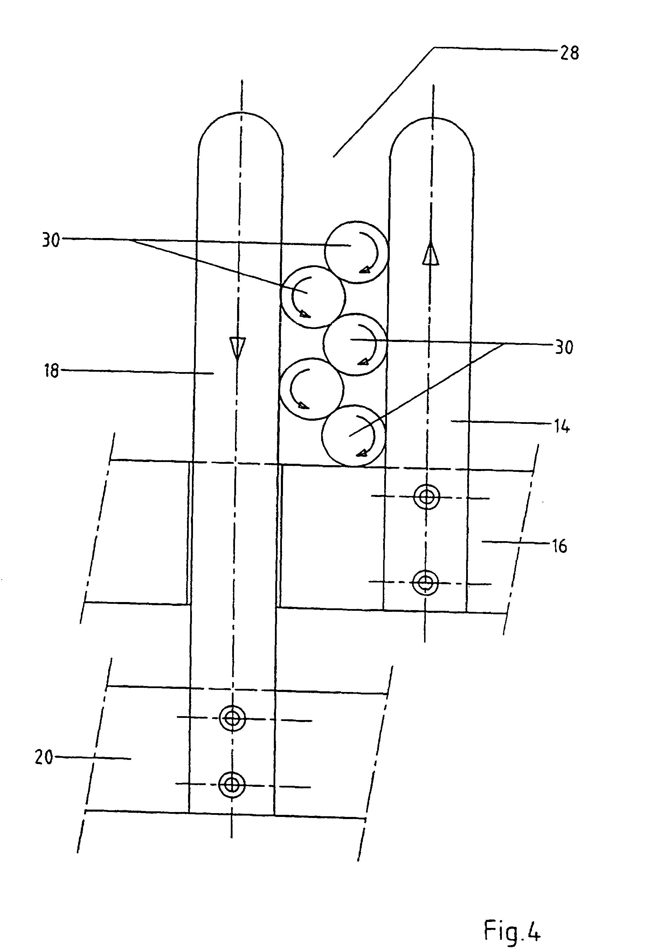

Fig. 4 zeigt die erfindungsgemäße Lösung im vergrößerten Maßstab. Man kann gut eine kurze Einziehlamelle 14 und eine lange Einziehlamelle 18 erkennen. Dazwischen ist ein Spalt 28, in dem Spulen 12 bzw. einzelne Drähte 30 im Schnitt gezeigt sind.

Der wichtige Einziehschritt ist nicht so sehr der Schritt aus Position Fig. 1 in Position Fig. 2 sondern der Schritt aus Position Fig. 2 nach Position Fig. 3. Bei diesem Einziehschritt erfolgt ein Hub der langen Einziehlamellen 18 nach unten und der kurzen Einziehlamellen 14 nach oben, wobei der Einziehstern 16 gemeinsam mit den kurzen Lamellen 14 nach oben führt und die ganzen Drähte 30, die eine Spulenaufbauhöhe von 80 - 100 mm haben können, vor sich her schiebt. Der Vorteil der Erfindung wird dadurch unterstützt, dass die kurze Einziehlamelle 14 sich entgegengesetzt zu der langen Einziehlamelle 18 bewegt. Das bedeutet, dass die Drähte 30 zwischen den Lamellen 14 und 18 in Bewegung geraten und zwar so, als ob man einen Bleistift zwischen zwei flach ausgestreckten Handflächen aufnimmt und diese gegeneinander verschiebt. Selbstverständlich können sich die Drähte 30 entlang der ganzen Einziehlamellen 14 und 18 nicht abrollen. Die Erfindung nutzt aber diesen Abrolleffekt, in dem sich die Drähte 30 nur einen kurzen Umdrehungsabschnitt ca. ¼ Umdrehung drehen; hierdurch entspannt sich die ganze Spulenaufbauhöhe und wiederum durch diese Entspannung der Spulenaufbauhöhe kann der Draht 30 seine kurze vorgespannte Drehung zurückschnappen, weil er selbst durch die anfängliche Drehung unter Spannung stand.

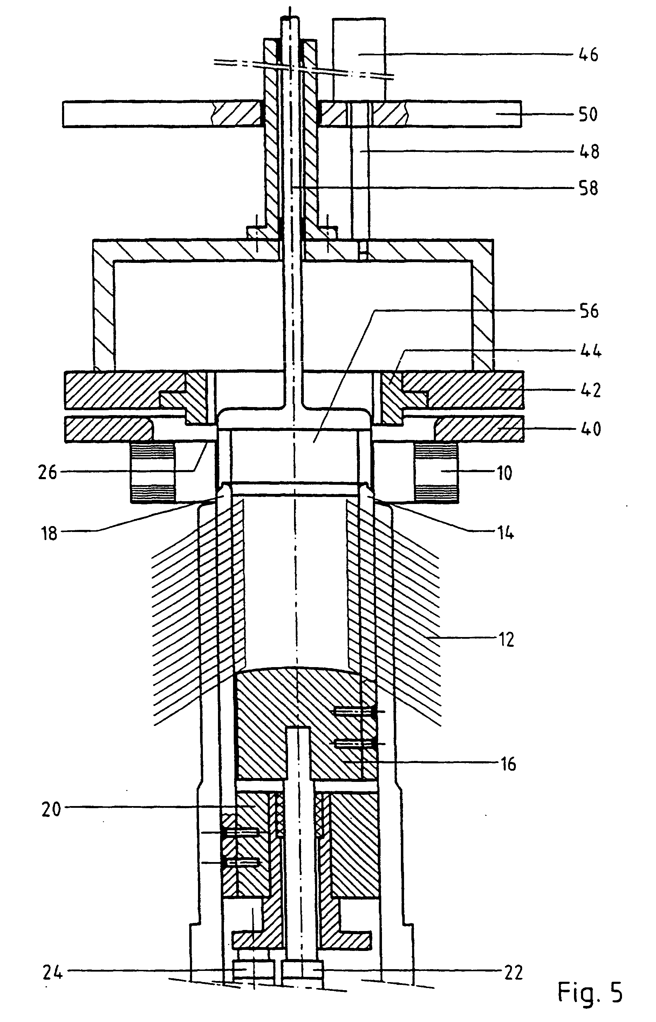

Die Fig. 5-7 zeigen Einziehwerkzeuge in einzelnen Verfahrensschritten, die bereits mit den Fig. 1-3 beschrieben wurden. Hinzugekommen ist ein Niederhalter 40 für den Stator 10, der zwar erforderlich ist, aber für diese Erfindung eine untergeordnete Rolle spielt.

Wichtig ist eine Abstützung, die axial über dem Stator 10 angeordnet ist und im einzelnen aus einem Haltering 42 mit einem innenliegenden Stützring 44 und einem Antrieb 46 mit seiner Hubstange 48 besteht. Der Antrieb 46 ist an einem Träger 50 befestigt und über seine Hubstange 48 mit dem Haltering 42 verbunden. Der Träger 50 ist hier nicht näher gezeigt aber mit einem Maschinengestell für die Gesamtvorrichtung fest verbunden.

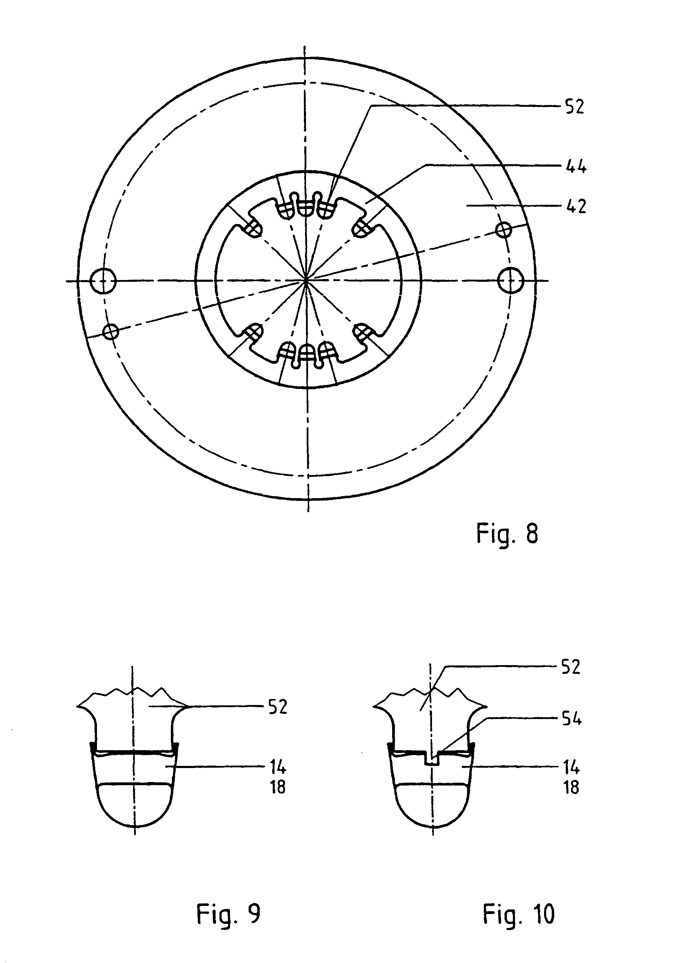

Fig. 8 zeigt eine Draufsicht auf Fig. 5 im Bereich des Halterings 42. Im Haltering 42 ist ein innenliegender Stützring 44 gelagert, an dem Stützfinger 52 angeformt sind, die die innenliegenden Einziehlamellen von außen abstützen.

Eine Abstützung der Einziehlamellen 14 und 18 kann wie in Fig. 9 vergrößert gezeigt ausgeführt werden , in dem der Stützfinger 52 eine Kontur aufweist, die einem Statorzahn entspricht oder man schleift wie in Fig. 10 gezeigt ist, eine spezielle Führung 54 ein. Die Stützfinger 52 haben die Aufgabe, die Einziehlamellen 14 und 18 von außen abzustützen und so zu führen, dass der Nutschlitz zwischen den Einziehlamellen 14 und 18 maßgenau bleibt. Durchaus denkbar, aber relativ aufwendig ist eine Möglichkeit, die Stützfinger 52 im Stützring 44 radial verfahrbar auszulegen.

Vollständigkeitshalber sei noch zu erwähnen, dass ein an sich bekannter Ausrichtstern 56 mittels Hubstange 58 und einem nicht gezeigten Antrieb axial über und durch den Stator 10 bewegbar ist. Bevor der Stator 10 auf die Einziehlamellen 14 und 18 aufgesetzt wird, fährt der Ausrichtstern 56 durch den über den Einziehlamellen 14 und 18 gehaltenen Stator 10 hindurch in die Einziehlamellen 14 und 18. Nachdem der Stator 10 zu den Einziehlamellen 14 und 18 mittels Ausrichtstern 56 ausgerichtet ist, kann der Stator 10 auf die Einziehlamellen 14 und 18 aufgesetzt werden. Beim Einziehen bzw. Vorwärtsfahren der Einziehlamellen 14 und 18 werden alle oder mindestens die kurzen Einziehlamellen 14 im Einziehstern 56 ausgerichtet und im Bereich 60 zusätzlich zentriert. Die Arbeitsweise der beschriebenen neuen Abstützung ist, dass der Haltering 42 mit seinem Stützring 44 mittels Antrieb 46 axial zum Stator 10 fährt und die durch den Stator beim Einziehvorgang hindurchkommenden Einziehlamellen 14 und 18 übernimmt und führt, so dass der Spalt zwischen den Einziehlamellen 14 und 18 maßgenau auch über den Stator 10 hinaus gehalten wird.

Nachfolgend wird die Arbeitsweise der Abstützung gemäß der bereits gezeigten Verfahrensschritte beschrieben, wobei die Erfindung der Abstützung nicht nur für das Verfahren nach Fig. 1-3 sondern auch für andere Einziehverfahren von Vorteil und anwendbar sind, und zwar immer dann, wenn die Schritte des Einziehverfahrens Einziehlamellen über die Statoroberkante 26 hinausfahren lassen.

Fig. 5 zeigt einen Ring paralleler, mit ihren freien Enden nach oben weisenden Einziehlamellen, in die bevor ein Statorblechpaket 10 aufgesetzt worden ist, Spulen 12 in die Spalten zwischen den Lamellen eingewickelt oder übertragen wurden. Der Ring der Einziehlamellen besteht aus kurzen Einziehlamellen 14, insbesondere jede zweite im Bereich der eingelegten Spulen 12 die fest mit einem Einziehstern 16 verschraubt und aus langen Einziehlamellen 18, die mit einem Lamellenhalter 20 verschraubt sind, wobei der Einziehstern 16 mittels eines Hubzylinders 22 und der Lamellenhalter 20 mittels eines Hubzylinders 24 axial steuerbar ist.

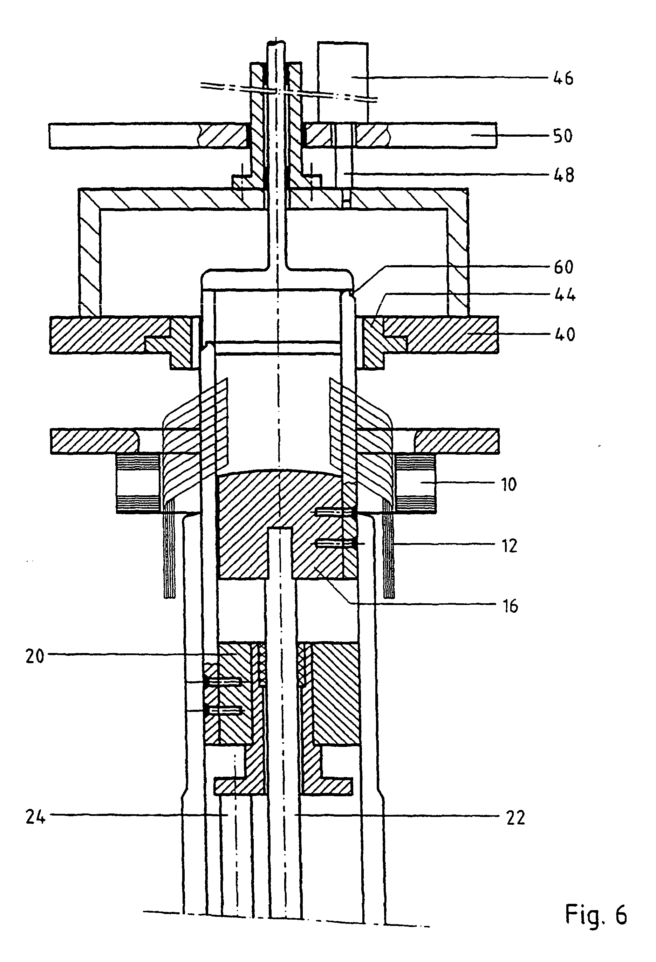

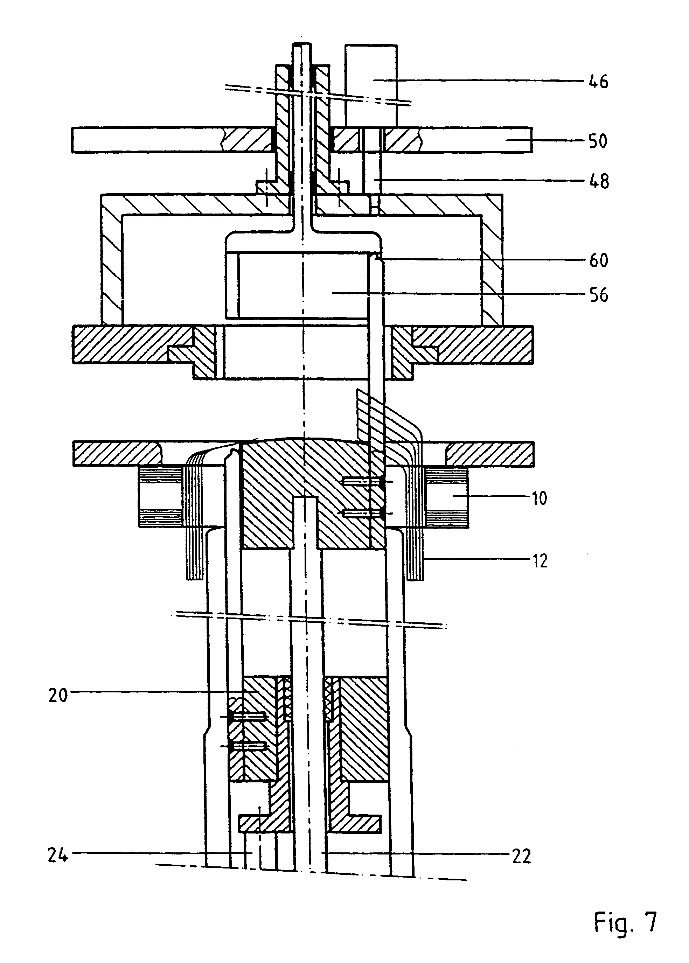

Fig. 6 und Fig. 7 zeigen die gleiche Vorrichtung wie Fig. 5, jedoch jeweils einen Verfahrensschritt weiter.

Bevor der erste Verfahrensschritt erfolgt, fährt die selbst geführte und zentrierte Abstützung mit ihrem innenliegenden Stützring 44 bis kurz vor die Statoroberkante 26 in Warteposition.

Fig. 6 zeigt einen Verfahrensschritt, in dem die freien Enden der kurzen Einziehlamellen 14 und die langen Einziehlamellen 18 auf ihrem Weg durch die Statorbohrung schon über die Statoroberkante 26 hinausgefahren sind. Auf diesem Weg von der Stellung in Fig. 5 zu der Position in Fig. 6 sind die Einziehlamellen 14 und 18 synchron gefahren und haben hierbei die Spulen 12 mitgenommen und teilweise in den Stator 10 eingezogen.

Bei diesem gemeinsamen Vorwärtshub aller Einziehlamellen 14 und 18 sind diese nach dem Verlassen der Statoroberkante 26 in einen Kranz von Stützfingern 52 eingefahren und werden von diesem in Flucht gehalten.

Jetzt aus der Position Fig. 6 , in der die freien Enden der Einziehlamellen 14 und 18 über der Statoroberkante 26 stehen, werden die langen Einziehlamellen 18 bis knapp über die Statoroberkante 26 zurückgezogen, wobei der Einziehstern 16 und die kurzen Einziehlamellen 14 gemeinsam mit der Abstützung vorwärts fahren. Hierdurch verlassen die langen Einziehlamellen 18 die Stützfinger 52, wobei die kurzen Einziehlamellen 14 weiter geführt werden. In dieser Position Fig. 7 ist mit den kurzen Einziehlamellen 14 auch der Einziehstern 16 in eine Position über die Statoroberkante 26 herausgefahren und hat die Spulen 12 in ihre Endstellung gebracht und somit eingezogen. Anschließend fahren die Einziehlamellen 14 und 18 aus Position Fig. 7 zurück in die Ausgangsposition Fig. 5 und die Abstützung 42, 44, 52 und Niederhalter 40 fahren vom Stator 10 weg und der fertige Stator 10 kann entnommen werden.

Die neue Abstützung mittels Haltering 42, Stützring 44 und Stützfinger 52 unterstützt das neue Verfahren, indem es freie über die Statoroberkante 26 hinausfahrende Einziehlamellen 14 und 18 zentriert und somit den Druck auf die Statorzähne mindert und dazu dient, dass Spulendrähte nicht zwischen den Einziehlamellen 14 und 18 eingeklemmt werden.

Wie bereits erwähnt ist die Abstützung 42, 44, 52 verfahrensunabhängig. Es ist auch denkbar, insbesondere wenn keine hohen Spulenaufbauhöhen vorhanden sind, dass ein Kranz von Einziehlamellen 14 und 18 aus Position Fig. 6 gemeinsam weiter vorwärts fahren und die Spulen 12 in den Stator 10 einziehen.

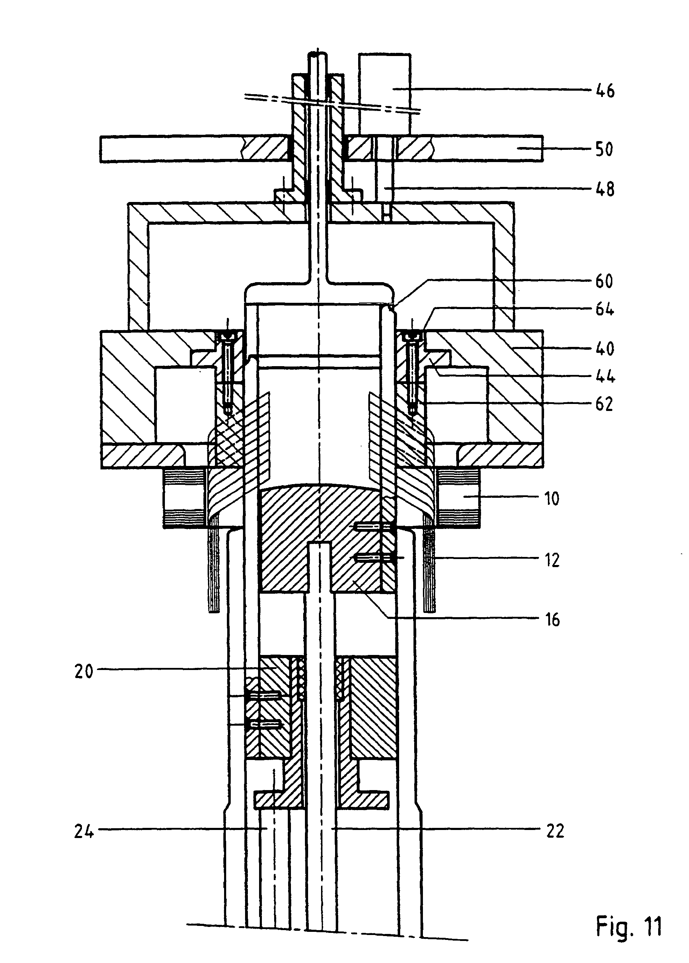

Wenn der Einziehdruck beim Verfahren der Einziehlamellen 14, 18 sehr hoch ist und hierdurch die Gefahr besteht, dass einzelne Bleche des Statorzahnes angehoben werden, ist eine weitere Abstützung vorteilhaft, deren Gestaltung sich aus den Figuren 11 bis 14 ergibt.

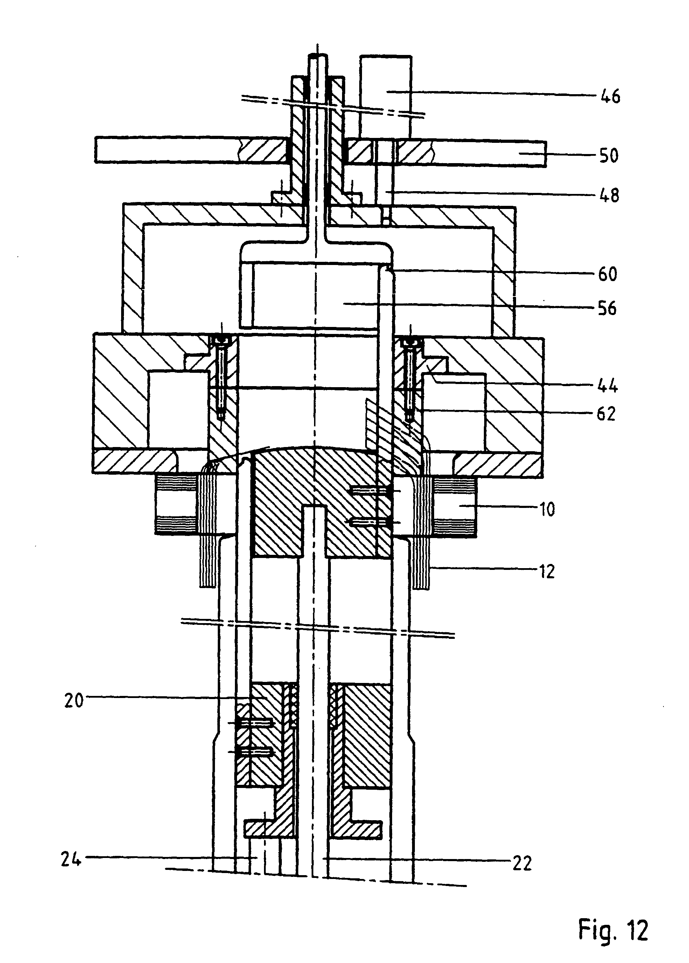

Die Ausführungsform nach den Figuren 11 und 12 unterscheidet sich im Wesentlichen von der nach den Figuren 6 und 7 dadurch, dass die am Stützring 44 vorhandenen Stützfinger 52 durch Stempel 62 verlängert sind und dadurch die Stützfinger 52 nicht nur die Einziehlamellen 14, 18 führen, sondern auch noch über den Stempel 62 die Statorzähne niederhalten. Die Stempel 62 können mittels Schrauben 64 oder einstückig mit den Stützfingern 52 verbunden sein und bilden somit eine Einheit mit dem Niederhalter 40.

Die Einheit aus dem Niederhalter 40 und den Stempeln 62 hat den Vorteil, dass nach dem Einwickeln der Spule 12 der Stator 10 auf das Einziehwerkzeug aufgesetzt werden kann, dass man dann diese Einheit axial auf den Stator 10 fährt und den Stator nicht nur, wie bereits bekannt, auf dem Statorpaket, sondern zusätzlich an den Statorzähnen niederhält.

In bestimmten Fällen ist es auch denkbar, die Einheit aus dem Niederhalter 40 und den Stempeln 62 zu trennen und mit gesonderten Antrieben zu steuern, beispielsweise dann, wenn es erforderlich ist, die Abstützung 42, 44, 52, 62 für einen zweiten Einziehvorgang zu indexieren, um eine zweite Lage einzuziehen.

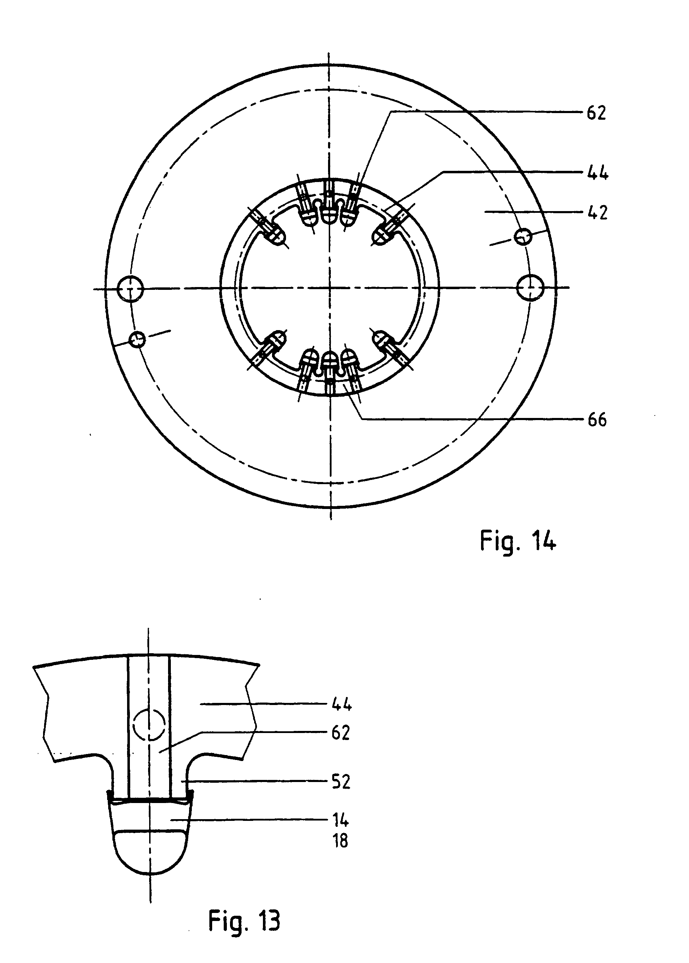

Die Figuren 13 und 14 zeigen eine Abstützung 42, 44, 52 mit den Stempeln 62, wobei die Figur 13 ein vergrößertes Detail zeigt, indem ein Stempel 62 und ein Stützfinger 52 in Anlage an eine Einziehlamelle 14, 18 dargestellt ist.

Wie die Figur 13 erkennen lässt, sind die Stempel 62 schmaler ausgeführt als die Stützfinger 52. Dieses hat den Vorteil, dass die Stempel 62 so lange die Statorzähne abstützen können, bis die komplette Wicklung eingezogen ist. Der Freiraum 66 zwischen den Stempeln 62 ermöglicht es beim Einziehen, dass die Wicklung über dem Stator Platz hat, sich aufzufächern. Sollten in bestimmten Fällen die Stempel 62 nur jeden zweiten Statorzahn niederhalten oder weiter auseinander liegen, so könnte der Stempel 62 die gleiche Kontur haben wie die Stützfinger 52.

Der Einsatz der verlängerten Stützfinger 52 mittels Stempel 62 ist verfahrensunabhängig. Vorteilhaft ist der Einsatz jedoch bei den Einziehverfahren, bei denen mitfahrende Einziehlamellen zum Einsatz kommen.

Die vorgeschlagene Lösung wird insbesondere bei Kompressormotoren angewendet, deren Anforderungen von Jahr zu Jahr gestiegen sind, und zwar versucht man den Wirkungsgrad der Motoren zu verbessern, in dem man nicht nur den Nutschlitz so klein wie möglich auslegt, sondern auch noch so viel wie möglich Kupferdraht in die Nuten bringen will. Dieses wiederum wirkt sich aber negativ auf das Einziehen der Spulen in den Stator aus, aber durch die vorgeschlagene Lösung können wieder Statoren mit den neuesten Anforderungen eingezogen werden.

## Patentansprüche

1. Verfahren zum Einziehen von Spulen (12) in Nuten in Statorblechpaketen (10) elektrischer Maschinen, wobei die Spulen (12) auf einer Schablone erzeugt und auf ein aus entsprechend ringförmig angeordneten, parallellen, kurzen und langen Einziehlamellen (14,18) und einem axial verfahrbaren Einziehstern (16) bestehendes Einziehwerkzeug übertragen und von diesem in die Nuten eingezogen werden, wobei in einer ersten Phase des Einziehvorgangs zusammen mit einer Vorschubbewegung des Einziehsterns (16) die kurzen Einziehlamellen (14) und die langen Einziehlamellen (18) mit ihren nach oben weisenden freien Enden synchron aus einer ersten Ausgangsposition vorwärts durch die Bohrung des Stators (10) über die Statoroberfläche (26) hinaus zu einer zweiten Position fahren, **dadurch gekennzeichnet, daß** in einer zweiten Phase die freien Enden der langen Einziehlamellen (18) bis knapp über die Statoroberkante (26) in eine dritte Position zurückgezogen werden, während der Einziehstern (16) und die kurzen Einziehlamellen (14) gemeinsam vorwärts bis zu einer dritten Position fahren, und daß in einer dritten Phase der Einziehstern (16), die kurzen Einziehlamellen (14) und die langen Einziehlamellen (18) aus der dritten Position in die Ausgangsposition zurückfahren.

2. Verfahren nach Anspruch 1, **dadurch gekennzeichnet, dass** in der zweiten Phase die langen Einziehlamellen (18) mindestens teilweise zurückgezogen werden, bevor der Einziehstern (16) und die kurzen Einziehlamellen (14)vorwärts fahren.

3. Verfahren nach Anspruch 2, **dadurch gekennzeichnet, dass** in der zweiten Phase, nachdem die langen Einziehlamellen (18) teilweise zurückgezogen wurden, diese weiter zurückgezogen werden, wobei dann gleichzeitig der Einziehstern (16) und die kurzen Einziehlamellen (14) vorwärts fahren.

4. Verfahren nach Anspruch 1, **dadurch gekennzeichnet, dass** in der zweiten Phase die langen Einziehlamellen (18) zurückgezogen werden, wobei gleichzeitig der Einziehstern (16) und die kurzen Einziehlamellen (14) vorwärts fahren.

5. Verfahren nach Anspruch 1, **dadurch gekennzeichnet, dass** in der zweiten Phase die langen Einziehlamellen (18) mit dem Einziehstern (16) und den kurzen Einziehlamellen (14) alternierend verfahren.

6. Verfahren nach Anspruch 1, **dadurch gekennzeichnet, dass** der Einziehstern (16) und die kurzen Einziehlamellen (14) gemeinsam aus der Ausgangsposition mit einer kontinuierlichen Geschwindigkeit über die zweite Position hinweg zur dritten Position fahren.

7. Verfahren nach Anspruch 5, **dadurch gekennzeichnet, dass** die langen Einziehlamellen (18) aus der zweiten Position in die dritte Position mit gleicher Geschwindigkeit fahren wie die kurzen Einziehlamellen (14).

8. Verfahren nach Anspruch 1, **dadurch gekennzeichnet, dass** die langen Einziehlamellen (18) aus der zweiten Position in die dritte Position mit höherer Geschwindigkeit fahren als die kurzen Einziehlamellen (14).

9. Vorrichtung zur Durchführung des Verfahrens nach einem der Ansprüche 1 bis 8, wobei in einer ersten Phase des Einziehvorgangs an einem Einziehstern (16) befestigte, kurze Einziehlamellen (14) mittels eines ersten Antriebs (22) und an einem Lamellenhalter (20) befestigte lange Einziehlamellen (18) mittels eines zweiten Antriebs (24) mit ihren nach oben weisenden freien Enden synchron aus einer Ausgangsposition über die Statoroberkante (26) hinaus zu einer zweiten Position verfahrbar sind, **dadurch gekennzeichnet, daß** in einer zweiten Phase der zweite Antrieb (24) umsteuerbar ist und zusammen mit dem Lamellenhalter (20) die freien Enden der langen Einziehlamellen (18) bis knapp über die Statoroberkante (26) in eine dritte Position zurückziehbar sind, während der erste Antrieb (22) den Einziehstern (16) und die kurzen Lamellen vorwärts bis zu einer dritten Position antreibt, und daß in einer dritten Phase durch die Antriebe (22, 24) der Einziehstern (16) mit den kurzen Lamellen und der Lamellenhalter (20) mit den langen Lamellen in die Ausgangsposition zurückziehbar sind.

10. Vorrichtung nach Anspruch 9, **dadurch gekennzeichnet, daß** die Antriebe (22) und (24) in ihren Gewindigkeiten und Richtungen frei steuerbar sind.

11. Vorrichtung nach Anspruch 9, **dadurch gekennzeichnet, dass** eine Abstützung (42,44) mit Stützfingern (52) über der Statoroberkante (26) angeordnet ist, wobei die Stützfinger (52) an über die Statoroberkante (26) hinausfahrenden Einziehlamellen (14 und 18) zur Anlage kommen.

12. Vorrichtung nach Anspruch 11, **dadurch gekennzeichnet, dass** die Abstützung (42,44,52) axial über dem Stator (10) angeordnet ist.

13. Vorrichtung nach Anspruch 11, **dadurch gekennzeichnet, dass** die Abstützung (42,44,52) axial verfahrbar ist.

14. Vorrichtung nach Anspruch 13, **dadurch gekennzeichnet, dass** die Abstützung (42,44,52) synchron mit den Einziehlamellen (14 und 18) verfahrbar ist.

15. Vorrichtung nach Anspruch 11, **dadurch gekennzeichnet, dass** eine Abstützung aus radial verfahrbaren Stützfingern (52) besteht.

## Claims

1. A method for drawing coils (12) into slots in laminated stators (10) of electrical machines in which the coils (12) are produced on a form and transferred onto an insertion tool, consisting of appropriately annularly arrayed parallel short and long insertion shafts (14, 18) and an axially driven insertion star (16), and drawn by the insertion tool into the slots, wherein in a first phase of the insertion process, together with an advance movement of the insertion star (16), the short insertion shafts (14) and the long insertion shafts (18) with their free ends up, synchronously move forward from a first, starting position through the bore of the stator (10) past the upper edge (26) of the stator to a second position, **characterised in that** in a second phase the free ends of the long insertion shafts (18) are retracted to just above the upper edge (26) of the stator into a third position, while the insertion star (16) and the short insertion shafts (14) move together forward to a third position, and that in a third phase the insertion star (16), the short insertion shafts (14) and the long insertion shafts (18) return from the third position to the starting position.

2. Method according to claim 1, **characterised in that** in the second phase the long insertion shafts (18) are at least partially retracted before the insertion star (16) and the short insertion shafts (14) move forward.

3. Method according to claim 2, **characterised in that** in the second phase, after the long insertion shafts (18) have been partially retracted, they are further retracted, while then at the same time the insertion star (16) and the short insertion shafts (14) move forward.

4. Method according to claim 1, **characterised in that** in the second phase the long insertion shafts (18) are retracted, while at the same time the insertion star (16) and the short insertion shafts (14) move forward.

5. Method according to claim 1, **characterised in that** in the second phase the long insertion shafts move in alternation with the insertion star (16) and the short insertion shafts (14).

6. Method according to claim 1, **characterised in that** the insertion star (16) and the short insertion shafts (14) move together from the starting position with a continuous speed past the second position to the third position.

7. Method according to claim 5, **characterised in that** the long insertion shafts (18) travel from the second position to the third position at the same speed as the short insertion shafts (14).

8. Method according to claim 1, **characterised in that** the long insertion shafts (18) run from the second position to the third position with greater speed than the short insertion shafts (14).

9. Apparatus for the practice of the method according to any one of claims 1 to 8, wherein in a first phase of the insertion process short insertion shafts (14) fastened to an insertion star (16) move by means of a first drive (22) and long insertion shafts (18) fastened to a shaft holder (20) move by means of a second drive (24) synchronously, with their free ends up, from a starting position past the stator upper edge (26) to a second position, **characterised in that** in a second phase the second drive (24) reverses and, together with the shaft holder (20), retracts the free ends of the long insertion shafts (18) to just above the stator upper edge (26) into a third position, while the first drive (22) drives the insertion star (16) and the short insertion shafts (14) forward to a third position, and that in a third phase the drives (22, 24) retract the insertion star (16) with the short insertion shafts and the shaft holder (20) with the long insertion shafts to the starting position.

10. Apparatus according to claim 9, **characterised in that** the drives (22, 24) are freely controllable in their speed and direction.

11. Apparatus according to claim 9, **characterised in that** a support means (42, 44) with abutments (52) is disposed above the top edge (26) of the stator, the abutments (52) coming in contact with the insertion shafts (14, 18) running past the top edge (26) of the stator.

12. Apparatus according to claim 11, **characterised in that** the support means (42, 44, 52) is disposed axially above the stator (10).

13. Apparatus according to claim 11, **characterised in that** the support means (42, 44, 52) is axially movable.

14. Apparatus according to claim 13, **characterised in that** the support means (42, 44, 52) is movable synchronously with the insertion shafts (14, 18).

15. Apparatus according to claim 11, **characterised in that** a support means consists of radially movable abutments (52).

## Revendications

1. Procédé pour insérer des bobines (12) dans des encoches situées dans des empilages de tôles (10) d'un stator de machines électriques, selon lequel les bobines (12) sont produites sur un gabarit et sont transférées sur un outil d'insertion, composé de lamelles d'insertion (14, 18) parallèles courtes et longues et disposées en anneau de façon correspondante et d'une étoile d'insertion (16) mobile axialement, et sont insérées par celui-ci dans les encoches, selon lequel, dans une première phase de l'opération d'insertion, conjointement avec un mouvement d'avancée de l'étoile d'insertion (16) les courtes lamelles d'insertion (14) et les longues lamelles d'insertion (18), avec leurs extrémités libres orientées vers le haut, sont déplacées vers l'avant en synchronie à travers l'alésage du stator (10) au-delà de la surface du stator (26) à partir d'une première position initiale jusque dans une deuxième position,
**caractérisé en ce que**
dans une deuxième phase, les extrémités libres des longues lamelles d'insertion (18) sont déplacées vers l'arrière dans une troisième position presque sur le bord supérieur de stator (26) tandis que l'étoile d'insertion (16) et les courtes lamelles d'insertion (14) sont déplacées ensemble vers l'avant jusque dans une troisième position et, dans une troisième phase, l'étoile d'insertion (16), les courtes lamelles d'insertion (14) et les longues lamelles d'insertion (18) reviennent de la troisième position à la position initiale.

2. Procédé selon la revendication 1,
**caractérisé en ce que**
dans la deuxième phase, les longues lamelles d'insertion (18) sont au moins partiellement déplacées vers l'arrière avant que l'étoile d'insertion (16) et les courtes lamelles d'insertion (14) ne soient déplacées vers l'avant.

3. Procédé selon la revendication 2,
**caractérisé en ce que**
dans la deuxième phase, après que les longues lamelles d'insertion (18) aient été partiellement déplacées vers l'arrière, celles-ci sont déplacées davantage encore vers l'arrière, l'étoile d'insertion (16) et les courtes lamelles d'insertion (14) étant simultanément déplacées vers l'avant.

4. Procédé selon la revendication 1,
**caractérisé en ce que**
dans la deuxième phase, les longues lamelles d'insertion (18) sont déplacées vers l'arrière, l'étoile d'insertion (16) et les courtes lamelles d'insertion (14) étant simultanément déplacées vers l'avant.

5. Procédé selon la revendication 1,
**caractérisé en ce que**
dans la deuxième phase, les longues lamelles d'insertion (18) et l'étoile d'insertion (16) avec les courtes lamelles d'insertion (14) sont alternativement déplacées.

6. Procédé selon la revendication 1,
**caractérisé en ce que**
l'étoile d'insertion (16) et les courtes lamelles d'insertion (14) sont déplacées ensemble à une vitesse continue depuis la position initiale jusque dans la troisième position en passant par la deuxième position.

7. Procédé selon la revendication 5,
**caractérisé en ce que**
les longues lamelles d'insertion (18) sont déplacées depuis la deuxième position jusque dans la troisième position à une vitesse égale à celle des courtes lamelles d'insertion (14).

8. Procédé selon la revendication 1,
**caractérisé en ce que**
les longues lamelles d'insertion (18) sont déplacées depuis la deuxième position jusque dans la troisième position à une vitesse supérieure à celle des courtes lamelles d'insertion (14).

9. Dispositif pour exécuter le procédé selon l'une des revendications 1 à 8, pour lequel, dans une première phase de l'opération d'insertion, de courtes lamelles d'insertion (14) fixées à une étoile d'insertion (16) et de longues lamelles d'insertion (18) fixées à un support de lamelles (20) à l'aide d'un premier entraînement (22) respectivement à l'aide d'un deuxième entraînement (24) avec leurs extrémités libres, étant orientées vers le haut,peuvent être déplacées en synchronie au-delà du bord supérieur de stator (26) depuis une position initiale jusque dans une deuxième position, **caractérisé en ce que**
dans une deuxième phase, le deuxième entraînement (24) peut être inversé et conjointement avec le support de lamelles (20) les extrémités libres des longues lamelles d'insertion (18) peuvent être déplacées vers l'arrière dans une troisième position presque jusque sur le bord supérieur de stator (26) tandis que le premier entraînement (22) entraîne l'étoile d'insertion (16) et les courtes lamelles d'insertion (14) en avant jusque dans une troisième position et, dans une troisième phase, l'étoile d'insertion (16) conjointement avec les courtes lamelles d'insertion (14) et le support de lamelles (20) conjointement avec les longues lamelles d'insertion (18) peuvent être déplacées vers l'arrière jusque dans la position initiale par les entraînements (22, 24).

10. Dispositif selon la revendication 9,
**caractérisé en ce que**
les entraînements (22) et (24) peuvent être librement commandés quant à leurs vitesses et à leurs directions.

11. Dispositif selon la revendication 9,
**caractérisé en ce qu'**
un appui (42, 44) comportant des doigts d'appui (52) est disposé sur le bord supérieur de stator (26), les doigts d'appui (52) entrant en contact avec les lamelles d'insertion (14 et 18) qui se déplacent vers l'extérieur au-delà du bord supérieur de stator (26).

12. Dispositif selon la revendication 9,
**caractérisé en ce que**
l'appui (42, 44, 52) est disposé axialement au-dessus du stator (10).

13. Dispositif selon la revendication 11,
**caractérisé en ce que**
l'appui (42, 44, 52) est mobile axialement.

14. Dispositif selon la revendication 13,
**caractérisé en ce que**
l'appui (42, 44, 52) est mobile en synchronie avec les lamelles d'insertion (14 et 18).

15. Dispositif selon la revendication 11,
**caractérisé en ce qu'**
un appui est constitué de doigts d'appui (52) mobiles radialement.
